# EUROPÄISCHE PATENTSCHRIFT

(11) **EP 3 310 081 B1**
(45) Veröffentlichungstag und Bekanntmachung des Hinweises auf die Patenterteilung: **01.05.2019**
(21) Anmeldenummer: 16193655.4
(22) Anmeldetag: 13.10.2016
(51) Int. Cl.: H04W 12/00, H04W 84/12, H04L 29/06, H04W 76/10, H04W 12/06, H04W 12/08, H04W 92/12, H04L 29/08

(54) **GERÄTE-AUTHENTIFIZIERUNG VON FLUGPERSONAL-MOBILGERÄTEN AN BORD VON FLUGZEUGEN**
DEVICE AUTHENTICATION OF AIR PERSONNEL MOBILE DEVICES ON BOARD AIRCRAFT
AUTHENTIFICATION D'APPAREILS MOBILES DE PERSONNELS NAVIGANTS À BORD D'AVIONS

(43) Veröffentlichungstag der Anmeldung: 18.04.2018
(73) Patentinhaber: Airbus Operations GmbH, 21129 Hamburg (DE); Airbus Defence and Space GmbH, 82024 Taufkirchen (DE)
(72) Erfinder: Kubisch, Dr. Martin, 21129 Hamburg (DE); Warns, Dr. Timo, 21129 Hamburg (DE); Netzler, Michael, 21129 Hamburg (DE)
(74) Vertreter: Frenkel, Matthias Alexander

(56) Entgegenhaltungen:
- US-A1- 2015 327 307
- Wi-Fi Alliance: "Wi-Fi Alliance Confidential Wi-Fi Protected Setup Specification Wi-Fi Protected Setup Specification", , 1. Dezember 2006 (2006-12-01), XP055279578, Gefunden im Internet: URL:http://v1ron.ru/downloads/docs/Wi-Fi Protected Setup Specification 1.0h.pdf [gefunden am 2016-06-10]
- CALHOUN P ET AL: "Control And Provisioning of Wireless Access Points (CAPWAP) Protocol Specification; rfc5415.txt", CONTROL AND PROVISIONING OF WIRELESS ACCESS POINTS (CAPWAP) PROTOCOL SPECIFICATION; RFC5415.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. März 2009 (2009-03-01), XP015065502, [gefunden am 2009-03-04]

## Beschreibung

Die Erfindung betrifft im Allgemeinen die Konfigurationen von Sicherheitseinstellungen eines an Bord eines Flugzeugs angeordneten Zugangspunkts. Im Speziellen betrifft die Erfindung Verfahren zum Konfigurieren von Sicherheitseinstellungen des Zugangspunkts, ein Verfahren zum Vorbereiten der Konfiguration der Sicherheitseinstellungen des Zugangspunkts, einen derartigen Zugangspunkt, ein mobiles Endgerät zum Vorbereiten der Konfiguration der Sicherheitseinstellungen des Zugangspunkts und ein System umfassend den Zugangspunkt und mindestens ein derartiges mobiles Endgerät.

Kabinenfunktionen an Bord eines Flugzeugs werden heutzutage mit Hilfe von speziellen, an Bord eines Flugzeugs angeordneten Bedienungsgeräten gesteuert. Derartige Bedienungsgeräte sind zumeist fest verdrahtet mit den zu steuernden Kabinenkomponenten, wie beispielsweise dem Kabinenlicht, Lautsprechern und anderen Kabinenkomponenten, verbunden. Über die feste Verdrahtung wird die Steuerung der Kabinenfunktionen zuverlässig ermöglicht. Es besteht ein wachsender Bedarf daran, mit Hilfe von drahtlosen Endgeräten, wie Mobiltelefonen und Tablets, Kabinenkomponentensteuerungsaufgaben zu übernehmen. Das Wegfallen der Verdrahtung führt zu einer Reduktion des Arbeitsaufwands des Kabinen-Flugpersonals. Zum anderen erhöht die Steuerung mit Hilfe von mobilen Endgeräten die Benutzerfreundlichkeit und die Service-Erfahrung der Fluggäste durch die direktere Reaktionsmöglichkeit des Kabinen-Flugpersonals. Denn jedes Mitglied der Flugzeugbesatzung kann sein eigenes Gerät mit sich führen und für die Steuerung verschiedenster Kabinenfunktionen verwenden sowie beispielsweise unverzüglich Meldungen, Warnungen und Alarme des Kabinenmanagement-Systems erhalten. Es ist jedoch von Bedeutung, dass die Steuerung von Kabinenkomponenten nur bestimmten mobilen Endgeräten erlaubt sein darf. Daher besteht das Bedürfnis nach einer Authentifikation der Endgeräte vor dem Steuervorgang.

Für Wireless Fidelity, WiFi, stehen verschiedene bekannte Authentifizierungsverfahren zur Verfügung, nämlich das sogenannte Wi-Fi Protected Access 2, WPA2, Personal und das sogenannte WPA2 Enterprise. WPA2 Personal benötigt keinen zusätzlichen Netzwerkdienst für die Sicherheit aber erfordert das Ausführen manueller Aktionen auf jedem Client-Endgerät im Falle einer ersten Verbindung oder von sich ändernden Anmeldedaten. Dies ist der Anwenderfreundlichkeit abträglich. WPA2 Enterprise benötigt einen zentralen Server, um alle benötigten Sicherheitsdaten an alle zugehörigen Zugangspunkte innerhalb eines Netzwerks zu verteilen. Dies ermöglicht zwar eine zentralisierte Verwaltung der Geräteauthentifizierung und Geräteautorisierung für das Erreichen der höchstmöglichen Sicherheit und Anwenderfreundlichkeit, da fern die Endgerätebenutzer keine manuellen Operationen ausführen müssen, um sich mit dem Netzwerk zu verbinden. Die mobile Endgeräte mit sich führende Flugbesatzung bewegt sich in der Regel jedoch zwischen verschiedenen Flügen von Flugzeug zu Flugzeug weiter. Dies erfordert, dass der außerhalb des Flugzeugs liegende zentrale Server mit allen Onboard-Zugangspunkten der gesamten Flotte der Fluglinie eine direkte Verbindung haben muss. Da eine derartige direkte Verbindung mit allen Onboard-Zugangspunkten nicht gewährleistet werden kann und auch nicht beabsichtigt ist, ist die Anwendbarkeit von WPA2 Enterprise für den Anwendungsfall der Authentifizierung mobiler Endgeräte auf verschiedenen Flugzeugen nicht praktikabel.

Das Dokument US 2015/0327307 offenbart eine Vorrichtung und ein Verfahren zur automatischen Verbindung eines mobilen Endgerätes zu einem W-LAN System eines Flugzeuges. Als Beispiel nennt das Dokument in seiner Einleitung eine "electronic flight bag (EFB)", welche für den Piloten eines Flugzeuges relevante Informationen, beispielsweise durch ein Tablet, bereitstellt. Ferner bedient sich die durch das Dokument vorgeschlagene Vorrichtung eines an Bord des Flugzeuges befindlichen Zugangspunktes für die Authentifizierung von mobilen Endgeräten.

Es besteht daher das Bedürfnis nach Verfahren und Geräten, welche eine Authentifizierung von mobilen Endgeräten an Bord von Flugzeugen auf anwenderfreundliche und zuverlässige Weise ermöglichen.

Gemäß einem ersten Aspekt wird ein Verfahren zum Konfigurieren von Sicherheitseinstellungen eines an Bord eines Flugzeugs angeordneten Zugangspunkts für die Authentifizierung von mobilen Endgeräten bereitgestellt. Anders ausgedrückt dienen die Sicherheitseinstellungen zur Authentifizierung von mobilen Endgeräten. Das Verfahren umfasst das Erhalten von flugbezogenen Sicherheitsdaten von einem mobilen Endgerät über eine Konfigurationsschnittstelle des Zugangspunkts. Ferner umfasst das Verfahren ein derartiges Konfigurieren von Sicherheitseinstellungen des Zugangspunkts in einem Konfigurationsmodus basierend auf den flugbezogenen Sicherheitsdaten, dass eine automatische Authentifizierung von vorkonfigurierten mobilen Endgeräten für den Zugriff auf den Zugangspunkt möglich ist. Anders ausgedrückt können mit Hilfe der flugbezogenen Sicherheitsdaten die Sicherheitseinstellungen des Zugangspunkts derart konfiguriert werden, dass vorkonfigurierte mobile Endgeräte auf ihre Zugriffsberechtigung auf den Zugangspunkt überprüft werden können.

Das Verfahren gemäß dem ersten Aspekt bezieht sich auf Schritte, die in dem Zugangspunkt oder aus der Sicht des Zugangspunkts durchgeführt werden.

Dadurch wird auf sichere Weise der Zugangspunkt konfiguriert, ohne dass eine Verbindung zwischen einem zentralen Sicherheitsdatenserver und dem Zugangspunkt bestehen muss. Ferner ist das Verfahren benutzerfreundlich, da kein manueller Schritt des Benutzers erforderlich ist.

Bei dem mobilen Endgerät, von dem der Zugangspunkt die flugbezogenen Sicherheitsdaten erhält kann es sich um ein mobiles Endgerät eines Hauptnutzers (Master-User) handeln, wie z.B. den für den entsprechenden Flug zuständigen Purser. Das mobile Endgerät kann demgemäß auch als mobiles Hauptendgerät bezeichnet werden. Bei den vorkonfigurierten mobilen Endgeräten, die authentifiziert werden können, kann es sich, neben dem mobilen Endgerät des Hauptnutzers, um mobile Endgeräte von Nebennutzern (normal users), wie z.B. mobile Endgeräte der Flugbesatzung des anstehenden Flugs, handeln. Diese mobilen Endgeräte können demgemäß als mobile Nebenendgeräte bezeichnet werden. Der grundsätzliche Aufbau der mobilen Nebenendgeräte und des mobilen Hauptendgeräts kann zumindest ähnlich sein. Die mobilen Nebenendgeräte können unterschiedlich zu dem mobilen Hauptendgerät vorkonfiguriert sein oder werden, so dass sich z.B. lediglich das mobile Hauptendgerät in dem später noch genauer beschriebenen Konfigurationsmodus mit dem Zugangspunkt über dessen Konfigurationsschnittstelle verbinden kann, die mobilen Nebenendgeräte jedoch nicht.

Die Begriffe "Authentifizieren" und "Authentifizierung" können hierin sowohl für den Vorgang der Berechtigungsprüfung als auch für das Ergebnis dieser Überprüfung verwendet werden. Bei den flugbezogenen Sicherheitsdaten kann es sich um für einen bestimmten Flug spezifische, d.h. flugspezifische, wie z.B. nur für einen bestimmten Flug gültige Sicherheitsdaten handeln. Im letzten Fall wären die Sicherheitsdaten für einen anderen Flug oder ein anderes Flugzeug nicht mehr gültig. Rein beispielhaft können die Sicherheitsdaten einen Netzwerknamen und/oder einen Netzwerkschlüssel umfassen. Ferner können die Sicherheitsdaten Informationen über die Gültigkeit / Ungültigkeit von Zertifikaten umfassen.

Das Verfahren kann ferner ein automatisches Authentifizieren von vorkonfigurierten mobilen Endgeräten, die sich in dem Versorgungsbereich des Zugangspunkt befinden, für den Zugriff auf den Zugangspunkt umfassen. Beispielsweise kann bei all den mobilen Endgeräten in dem Versorgungsbereich die Authentifizierung positiv verlaufen, d.h. bejaht werden, die derart vorkonfiguriert sind, dass diesen die flugbezogenen Sicherheitsdaten bekannt sind oder dass in diesen die flugbezogenen Sicherheitsdaten gespeichert sind. Es ist beispielsweise denkbar, dass den mobilen Endgeräten die entsprechenden flugbezogenen Sicherheitsdaten zuvor übermittelt wurden oder dass die flugbezogenen Sicherheitsdaten zuvor in den mobilen Endgeräten hinterlegt wurden. Die mobilen Endgeräte, die sich zwar in dem Versorgungsbereich des Zugangspunkts befinden, die jedoch nicht vorkonfiguriert sind, wie z.B. die flugbezogenen Sicherheitsdaten kennen, können nicht erfolgreich authentifiziert werden.

Das Verfahren kann ferner ein automatisches Autorisieren von vorkonfigurierten mobilen Endgeräten, die sich in dem Versorgungsbereich des Zugangspunkt befinden, für den Zugriff auf den Zugangspunkt umfassen. Autorisierung ist im weitesten Sinne eine Zustimmung, spezieller die Einräumung von Rechten. Die Autorisierung erfolgt sinnvollerweise nicht ohne eine vorherige erfolgreiche Authentifizierung. Die Informationstechnologie bezeichnet die Autorisierung das initiale Zuweisen und das wiederholt einleitende Überprüfen von Zugriffsrechten mittels spezieller Methoden bezüglich interessierter Systemnutzer zu Daten und zu Diensten. Im Speziellen kann hierin unter dem Autorisieren oder der Autorisierung z.B. der erlaubte Zugriff auf die Steuerung einer oder mehrere Komponenten, Geräte und/oder Einheiten der Flugzeugkabine verstanden werden.

Beispielsweise kann das Verfahren ferner umfassen ein Erhalten eines Triggersignals / Auslösesignals über einen sicheren Kommunikationskanal an dem Zugangspunkt. Der sichere Kommunikationskanal kann als fest verdrahtete Verbindung zwischen einer Komponente oder Einheit in der Kabine des Flugzeugs und dem Zugangspunkt ausgebildet sein. Alternativ kann der sichere Kommunikationskanal durch sogenannte out-of-band-Systeme realisiert sein, d.h. um Kommunikationssysteme, deren Funckanäle mit Frequenzbereichen arbeiten, die außerhalb der normalen oder üblichen Funkfrequenzbereiche liegen. Unabhängig von der genauen Realisierung des sicheren Kommunikationskanals kann der Kommunikationskanal nicht von außen abgehört werden. Nach Erhalt des Triggersignals / Auslösesignals kann die Konfigurationsschnittstelle aktiviert werden. Nach der Aktivierung kann die Konfigurationsschnittstelle für eine bestimmte Zeitdauer aktiviert bleiben, um die flugbezogenen Sicherheitsdaten zu erhalten. Es ist denkbar, dass die Konfigurationsschnittstelle des Zugangspunkts nur für eine bestimmte Zeitdauer aktiviert ist, z.B. nur für eine für den Erhalt der flugbezogenen Sicherheitsdaten notwendige Zeitdauer.

Gemäß einem Ausführungsbeispiel kann die Konfigurationsschnittstelle nach Erhalt der flugbezogenen Sicherheitsdaten deaktiviert werden. Auf diese Weise wird gewährleistet, dass die Konfigurationsschnittstelle nur so lange aktiviert ist wie erforderlich, wie z.B. nur für so lange bis der Empfang der flugbezogenen Sicherheitsdaten abgeschlossen ist. Dies erhöht die Zuverlässigkeit und Sicherheit weiter. Gemäß einem zweiten Ausführungsbeispiel, das unabhängig von oder in Kombination mit dem ersten Ausführungsbeispiel implementiert sein kann, kann die Konfigurationsschnittstelle nach Ablauf einer vorgegebenen Zeitspanne deaktiviert werden. Hierdurch wird gewährleistet, dass die Konfigurationsschnittstelle nicht länger als eine maximale Zeit aktiviert bleibt. Dies erhöht die Zuverlässigkeit und Sicherheit weiter.

Nach Erhalt der flugbezogenen Sicherheitsdaten kann ferner ein Normalmodus aktiviert werden. Es ist beispielsweise denkbar, dass der Normalmodus aktiviert wird, nachdem die Konfigurationsschnittstelle deaktiviert wurde und folglich der Zugangspunkt den Konfigurationsmodus verlassen hat. In dem Normalmodus ist der Zugriff von authentifizierten mobilen Endgeräten möglich. Das heißt, nach einer Authentifizierung und gegebenenfalls Autorisierung der vorkonfigurierten mobilen Endgeräte können die authentifizierten und gegebenenfalls für bestimmte Steuerungsfunktionen autorisierten mobilen Endgeräte in dem Normalmodus auf den Zugangspunkt zugreifen, d.h. mit diesem kommunizieren und beispielsweise Steuerbefehle schicken sowie Meldungen und Indikationen empfangen.

Gemäß einem zweiten Aspekt wird ein Verfahren zum Vorbereiten der Konfiguration von Sicherheitseinstellungen eines an Bord eines Flugzeugs angeordneten Zugangspunkts für die Authentifizierung von mobilen Endgeräten bereitgestellt. Das Verfahren umfasst ein Erhalten von flugbezogenen Sicherheitsdaten an einem mobilen Endgerät von einem Sicherheitsdatenserver. Das Verfahren umfasst ferner ein Weiterleiten der flugbezogenen Sicherheitsdaten an den Zugangspunkt, um ein derartiges Konfigurieren von Sicherheitseinstellungen des Zugangspunkts basierend auf den flugbezogenen Sicherheitsdaten zu ermöglichen, das eine automatische Authentifizierung von mobilen Endgeräten für den Zugriff auf den Zugangspunkt möglich ist.

Das Verfahren gemäß dem zweiten Aspekt bezieht sich auf Schritte, die in dem mobilen Endgerät des Hauptnutzers oder aus der Sicht des mobilen Endgeräts des Hauptnutzers durchgeführt werden.

Das mobile Endgerät kann die flugbezogenen Sicherheitsdaten von dem Sicherheitsdatenserver über eine zumindest teilweise drahtlose Verbindung, wie ein Mobilfunknetz, erhalten.

Das Verfahren kann ferner umfassen ein Anfordern der flugbezogenen Sicherheitsdaten durch das mobile Endgerät von einem Sicherheitsdatenserver. Zusätzlich und/oder alternativ kann das Verfahren ein Benachrichtigen des mobilen Endgeräts durch den Sicherheitsdatenserver umfassen, die flugbezogenen Sicherheitsdaten anzufordern oder abzuholen.

Das Verfahren kann ferner ein Auslesen oder Erzeugen der flugbezogenen Sicherheitsdaten durch das mobile Endgerät, z.B. durch das mobile Hauptendgerät, von einer von dem Sicherheitsdatenserver abweichenden Quelle der flugbezogenen Sicherheitsdaten umfassen. Die auf diese Weise ausgelesenen oder erzeugten Sicherheitsdaten können auf dem mobilen Endgerät gespeichert werden. Im Anschluss können die derartig ausgelesenen oder erzeugten flugbezogenen Sicherheitsdaten an den Zugangspunkt übersendet werden, um das Konfigurieren der Sicherheitseinstellungen des Zugangspunkts für den Zugriff auf den Zugangspunkt basierend auf den flugbezogenen Sicherheitsdaten zu ermöglichen. Auf diese Weise kann gewährleistet werden, dass der Zugangspunkt weiter an Bord des Flugzeugs genutzt werden kann, selbst wenn er beispielsweise durch Löschen der ursprünglich erhaltenen flugbezogenen Sicherheitsdaten zurückgesetzt wurde oder werden musste. Zudem kann auf diese Weise gewährleistet werden, dass dann, wenn eine ursprüngliche Übertragung der Sicherheitsdaten auf das und/oder die mobilen Endgeräte nicht möglich war (und letztendlich damit ggf. auch nicht auf den Zugangspunkt), die flugbezogenen Sicherheitsdaten nachträglich erzeugt oder ausgelesen und sowohl an dem Zugangspunkt als auch an den mobilen Nebenendgeräten für die Konfiguration zur Verfügung gestellt werden können. Die Sicherheitsdaten können auf verschiedene Weise erzeugt werden. Beispielsweise können die Sicherheitsdaten von einem privilegierten mobilen Endgerät, z.B. dem mobilen Hauptendgerät, erzeugt und an den Zugangspunkt sowie die mobilen Nebenendgeräte verteilt werden. Rein beispielhaft sei hier die Verteilung der Sicherheitsdaten an die mobilen Endgeräte mit Hilfe von Quick Response (QR)-Tags / QR-Codes oder NFC (Near Field Communication) Tags genannt.

Gemäß einem dritten Aspekt wird ein Verfahren zum Konfigurieren von Sicherheitseinstellungen eines an Bord eines Flugzeugs angeordneten Zugangspunkts für die Authentifizierung von mobilen Endgeräten bereitgestellt. Das Verfahren umfasst ein Erhalten von flugbezogenen Sicherheitsdaten an einem mobilen Endgerät von einem Sicherheitsdatenserver. Das Verfahren umfasst ferner ein Weiterleiten der flugbezogenen Sicherheitsdaten an den Zugangspunkt. Das Verfahren umfasst ferner ein Erhalten der flugbezogenen Sicherheitsdaten an dem Zugangspunkt von dem mobilen Endgerät über eine Konfigurationsschnittstelle des Zugangspunkts. Das Verfahren umfasst ferner ein derartiges Konfigurieren von Sicherheitseinstellungen des Zugangspunkts in einem Konfigurationsmodus basierend auf den flugbezogenen Sicherheitsdaten, dass eine automatische Authentifizierung der vorkonfigurierten mobilen Endgeräten für den Zugriff auf den Zugangspunkt möglich ist.

Das Verfahren gemäß dem dritten Aspekt bezieht sich auf Schritte, die durch ein Zusammenspiel des mobilen Endgerät des Hauptnutzers, des Zugangspunkts und der vorkonfigurierten mobilen Endgeräte ausgeführt oder aus deren Sicht durchgeführt werden.

Das Verfahren kann ferner ein automatisches Authentifizieren der vorkonfigurierten mobilen Endgeräte umfassen, die sich in dem Versorgungsbereich des Zugangspunkts befinden. Das Verfahren kann ferner ein Zugreifen der authentifizierten mobilen Endgeräte auf den Zugangspunkt umfassen.

Das Verfahren kann ferner ein Steuern von Kabinenfunktionen des Flugzeugs mit Hilfe der authentifizierten mobilen Endgeräte umfassen. Rein beispielhaft seien an dieser Stelle die Steuerung von Licht-, Klima- und Audio-Funktionen an Bord des Flugzeugs sowie die Steuerung von Text-Benachrichtigungen, Kabinen-Telefonie und von In-Flight Entertainment-Systemen allgemein genannt.

Gemäß einem vierten Aspekt wird ein Computerprogramm bereitgestellt, das, wenn es in einem Computer oder einem Prozessor geladen ist oder auf einem Computer oder Prozessor läuft, den Computer oder Prozessor dazu veranlasst, ein hierin beschriebenes Verfahren auszuführen. Das Computerprogramm kann auf einem computerlesbaren Programmspeichermedium gespeichert sein oder als Signal herunterladbar sein. Das Computerprogramm kann sich beispielsweise in Form einer Applikation (App) manifestieren, die auf einem hierin beschriebenen mobilen Endgerät ausführbar ist und läuft.

Gemäß einem fünften Aspekt wird ein Zugangspunkt bereitgestellt. Die Sicherheitseinstellungen des Zugangspunkts sind für die Authentifizierung von sich an Bord eines Flugzeugs befindenden mobilen Endgeräten konfigurierbar. Der Zugangspunkt umfasst eine Konfigurationsschnittstelle und eine Konfigurationskomponente. Die Konfigurationsschnittstelle ist dazu ausgebildet, flugbezogene Sicherheitsdaten von einem mobilen Endgerät zu erhalten. Die Konfigurationskomponente ist dazu ausgebildet, Sicherheitseinstellungen des Zugangspunkts in einem Konfigurationsmodus derart zu konfigurieren, dass eine automatische Authentifizierung von vorkonfigurierten mobilen Endgeräten für den Zugriff auf den Zugangspunkt möglich ist.

Der Zugangspunkt ist an Bord eines Flugzeugs installierbar. Er kann beispielsweise an Kabinenmanagement-Systeme (KMS) des Flugzeugs anbindbar sein und mit Komponenten und Einheiten des KMS kommunizieren können, wie z.B. Steuerbefehle an diese senden. Ein digitales KMS kann in Flugzeugen installiert sein. Es steuert für gewöhnlich die Funktionen in der Kabine und zeigt Kabinenparameter für Passagiere und Besatzung an. Dazu gehören unter anderem die Kabinenbeleuchtung, Cockpit-/Kabinendurchsagen, Türverschlussanzeige, Emergency-Signale, Nichtraucher-/Anschnallzeichen, Rauchmelder, Kabinentemperatur, Wasser-/Abfalltanks und diverse andere Kabinenfunktionen. Das KMS kann einen oder mehrere Zentralcomputer, einen oder mehrere Geräte mit Mensch-Maschine-Schnittstelle wie Displays, Tasten und Indikationsleuchten sowie ein Datennetzwerk zur Datenübertragung zwischen den Komponenten in der Kabine umfassen. Das KMS kann mit zusätzlichen verteilten Steuergeräten verbunden sein. Diese können zum Beispiel Schnittstellengeräte und daran angeschlossene Geräte mit einem Display umfassen, mit Hilfe derer verschiedene Kabinenfunktionen gesteuert (beispielsweise die Kabinentemperatur) oder Textnachrichten angezeigt werden können (z.B. für Passagieranrufe, Interphone-Anrufe oder Warnungen). Der Zugangspunkt kann sich derart mit einer oder mehrerer der genannten Komponenten oder Einheiten verbinden, dass eine oder mehrere Kabinenfunktionen gesteuert werden können. Rein beispielhaft sei an dieser Stelle genannt, dass der Zugangspunkt in ein Schnittstellengerät integriert ist oder mit dem Schnittstellengerät verbindbar ist. Ein Schnittstellengerät kann in diesem Fall ein Gerät des Kabinenmanagementsystems sein, das als ein Gateway zwischen dem Kabinenmanagementdaten-Backbone und den damit verbundenen Geräten, wie dem Textdisplay, Bedienkonsolen, Interphone und anderen dient.

Alle zuvor in Bezug auf das Verfahren gemäß dem ersten Aspekt beschriebenen Verfahrensmerkmale sind in dem Zugangspunkt realisierbar, beispielsweise in der Konfigurationsschnittstelle, der Konfigurationskomponente oder in anderen Komponenten und Einheiten des Zugangspunkts, wie einer Datenverarbeitungseinheit.

Gemäß einem sechsten Aspekt wird ein mobiles Endgerät zum Vorbereiten der Konfiguration von Sicherheitseinstellungen eines an Bord eines Flugzeugs angeordneten Zugangspunkts für die Authentifizierung von mobilen Endgeräten bereitgestellt. Das mobile Endgerät umfasst eine Empfangskomponente und eine Sendekomponente. Die Empfangskomponente ist dazu ausgebildet, flugbezogene Sicherheitsdaten von einem Sicherheitsdatenserver zu erhalten. Die Sendekomponente ist dazu ausgebildet, die flugbezogenen Sicherheitsdaten an den Zugangspunkt weiterzuleiten, um ein derartiges Konfigurieren von Sicherheitseinstellungen des Zugangspunkts basierend auf den flugbezogenen Sicherheitsdaten zu ermöglichen, dass eine automatische Authentifizierung von vorkonfigurierten mobilen Endgeräten für den Zugriff auf den Zugangspunkt möglich ist.

Ferner sind alle in Bezug auf das Verfahren gemäß dem zweiten Aspekt beschriebenen Merkmale in geeigneten Komponenten und Einheiten des mobilen Endgeräts realisierbar, wie beispielsweise der Empfangskomponente, der Sendekomponente oder weiteren Komponenten oder Einheiten, wie einer Datenverarbeitungseinheit.

Gemäß einem siebten Aspekt wird ein System umfassend den Zugangspunkt gemäß dem fünften Aspekt und mindestens ein mobiles Endgerät gemäß dem sechsten Aspekt bereitgestellt. Rein beispielhaft sei hier angemerkt, dass es sich bei dem mobilen Endgerät und/oder den vorkonfigurierten mobilen Endgeräten jeweils um ein Mobiltelefon, einen mobilen Computer (Laptop, Notebook), einen Tablet-Computer oder auch um ein tragbares anziehbares Gerät (wearable device), wie sogenannte Smartglasses oder Smartwatches, handeln kann.

Gemäß einem achten Aspekt wird ein Flugzeug umfassend den Zugangspunkt gemäß dem fünften Aspekt oder das System gemäß dem siebten Aspekt bereitgestellt.

Die vorliegende Offenbarung soll weiter anhand von Figuren erläutert werden. Diese Figuren zeigen schematisch:
- Figur 1: eine schematische Darstellung eines Ausführungsbeispiels eines an Bord eines Flugzeugs einsetzbaren Zugangspunkts;
- Figur 2: eine schematische Darstellung eines Ausführungsbeispiels eines mobilen Endgeräts zur Vorbereitung der Konfiguration des Zugangspunkts aus Figur 1;
- Figur 3a: eine erste Phase zur Konfiguration des Zugangspunkts aus Figur 1;
- Figur 3b: eine zweite Phase zur Konfiguration des Zugangspunkts aus Figur 1;
- Figur 3c: eine dritte Phase zur Konfiguration des Zugangspunkts aus Figur 1;
- Figur 4: ein Flussdiagramm, welches die drei Phasen aus den Figuren 3a bis 3c zusammenfasst;
- Figur 5a: eine erste Phase zur Konfiguration eines Zugangspunkts aus dem Stand der Technik; und
- Figur 5b: eine zweite Phase zur Konfiguration eines Zugangspunkts aus dem Stand der Technik.

Im Folgenden werden, ohne hierauf beschränkt zu sein, spezifische Details dargelegt, um ein vollständiges Verständnis der vorliegenden Erfindung zu liefern. Es ist einem Fachmann jedoch klar, dass die vorliegende Erfindung in anderen Ausführungsbeispielen verwendet werden kann, die von den nachfolgend dargelegten Details abweichen können. Beispielsweise wird die vorliegende Erfindung im Folgenden zumeist in Bezug auf das Konfigurieren von Sicherheitseinstellungen beschrieben. Die hierin beschriebenen Prinzipien sind jedoch ebenso anwendbar auf das Aktualisieren (Update) dieser Sicherheitsdaten.

Es ist dem Fachmann klar, dass die nachfolgend dargelegten Erklärungen unter Verwendung von Hardwareschaltungen, Softwaremitteln oder einer Kombination davon implementiert sein/werden können. Die Softwaremittel können in Zusammenhang stehen mit programmierten Mikroprozessoren oder einem allgemeinen Computer, einem ASIC (Application Specific Integrated Circuit; anwendungsspezifische integrierte Schaltung) und/oder DSPs (Digital Signal Processors; digitalen Signalprozessoren). Die Softwaremittel können als eine oder in einer Applikation (APP) realisiert sein, die auf einem Endgerät läuft. Es ist zudem klar, dass auch dann, wenn die nachfolgenden Details in Bezug auf ein Verfahren beschrieben werden, diese auch in einer geeigneten Vorrichtungseinheit, einem Computerprozessor und einem mit einem Prozessor verbundenen Speicher realisiert sein können, wobei der Speicher mit einem oder mehreren Programmen versehen ist, die das Verfahren durchführen, wenn sie durch den Prozessor ausgeführt werden.

Die beiliegenden Figuren dienen lediglich zum Zwecke der Verdeutlichung von Ausführungsbeispielen. Sie sind nicht maßstabsgetreu und sollen lediglich das allgemeine Konzept der Erfindung beispielhaft wiederspiegeln. Beispielsweise sollen Merkmale, die in den Figuren enthalten sind, keineswegs als notwendiger Bestandteil erachtet werden.

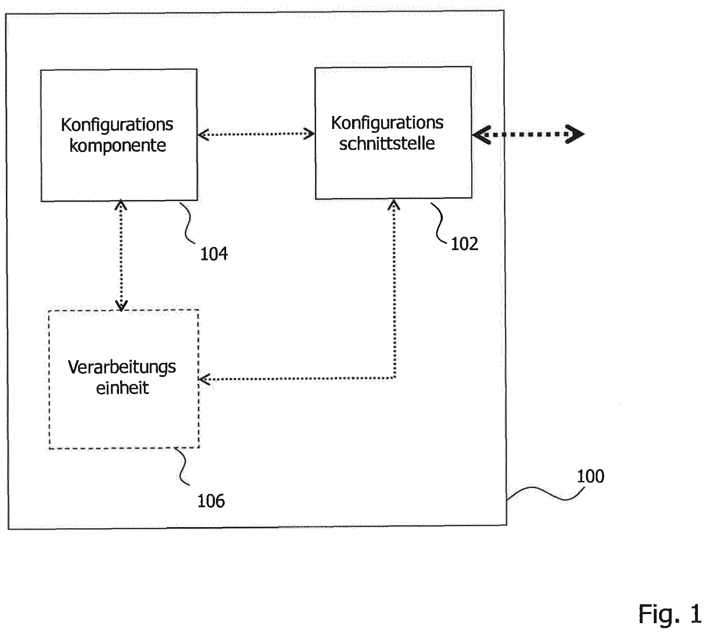

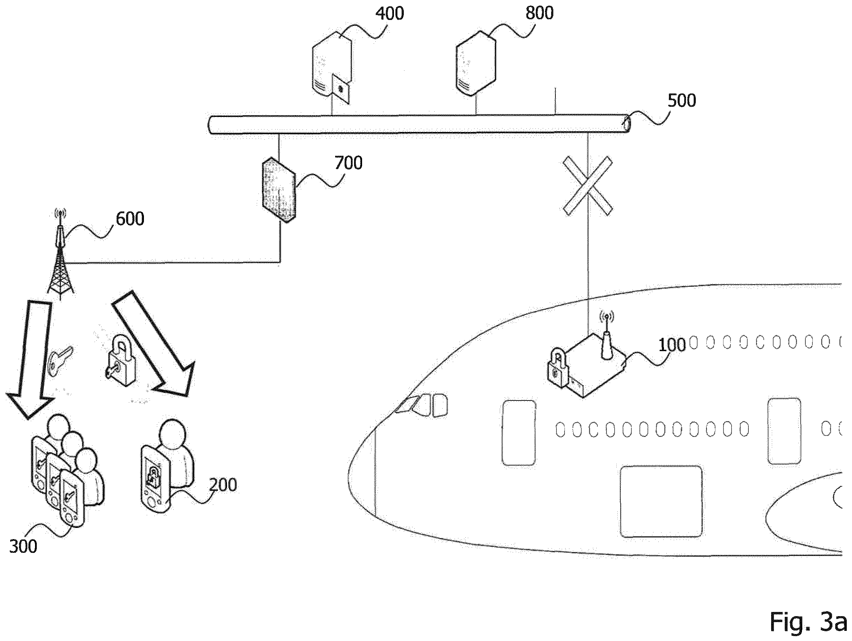

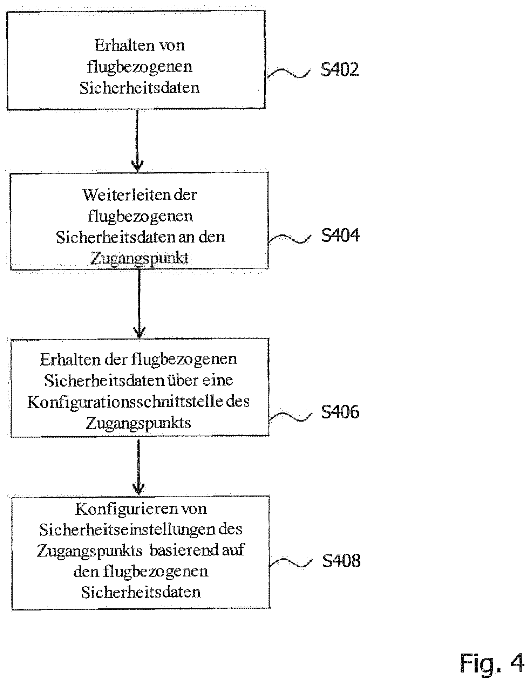

Figur 1 zeigt ein Blockdiagramm eines Ausführungsbeispiels eines an Bord eines Flugzeugs einsetzbaren und installierbaren Zugangspunkts 100. Der Zugangspunkt 100 weist eine Konfigurationsschnittstelle 102 und eine Konfigurationskomponente 104 auf. Ferner kann der Zugangspunkt 100 optional eine Verarbeitungseinheit 106 aufweisen. Die Konfigurationskomponente 104 ist rein beispielhaft in Figur 1 separat von der Verarbeitungseinheit 106 dargestellt. Alternativ kann die Konfigurationskomponente 104 jedoch auch Teil der Verarbeitungseinheit 106 sein. Weitere Details des Zugangspunkts 100 werden in Bezug auf die Figuren 3a bis 3c und 4 beschrieben.

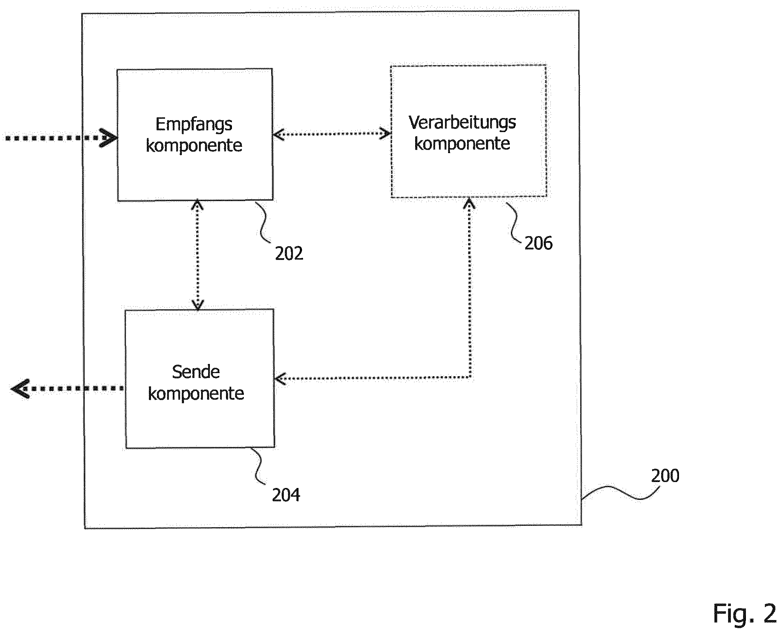

Figur 2 zeigt ein Ausführungsbeispiel eines mobilen Endgeräts 200. Das mobile Endgerät umfasst eine Empfangskomponente 202 und eine Sendekomponente 204. Ferner kann das mobile Endgerät 200 optional eine Verarbeitungskomponente 206 umfassen. Details des mobilen Endgeräts 200 werden nun in Bezug auf die Figuren 3a bis 3c und 4 erläutert.

Vor einem geplanten Flug befindet sich ein sogenannter Hauptnutzer (Master-User) mit dem mobilen Endgerät 200 nicht an Bord des Flugzeugs, zum Beispiel nicht in der Flugzeugkabine, d.h. nicht in dem Versorgungsbereich des Zugangspunkts 100. Das mobile Endgerät 200 kann sich z.B. mit Hilfe eines auf dem mobilen Endgerät 200 laufenden Softwarepakets mit einem Sicherheitsdatenserver 400. Rein beispielhaft findet diese Verbindung gemäß Figur 3a über ein sicheres Datennetzwerk 500, eine Firewall 700 und ein Mobilfunknetz 600 statt. Andere Verbindungsarten sind möglich. Ferner ist in Figur 3a ein Remote-Verbindungs-Server 800 gezeigt. Wie in Figur 3a ferner erkennbar, besteht keine dauerhafte Verbindung zwischen dem Zugangspunkt 100 einerseits und dem Netzwerk 500, dem Sicherheitsdatenserver 400 und dem Remote-Verbindungs-Server 800 andererseits. Ferner sind in Figur 3a mehrere mobile Endgeräte 300 zu erkennen, die nicht dem Hauptnutzer zugeordnet sind. Sie können prinzipiell jedoch genauso oder ähnlich aufgebaut sein wie das mobile Endgerät 200.

Stattdessen verbindet sich, im Einklang mit dem Beispiel aus Figur 3a, der Hauptnutzer, z.B. der Purser, mit Hilfe des mobilen Endgeräts 200 über ein Mobilfunknetz 600 mit dem Sicherheitsdatenserver 400. Im Zuge dessen wird geprüft, ob Sicherheitsdaten und/oder Aktualisierungen von Sicherheitsdaten für das mobile Endgerät 200 verfügbar sind. Diese Sicherheitsdaten sind spezifisch für den nächsten, von dem Hauptnutzer durchführenden Flug, und dienen zur derartigen Konfiguration des Zugangspunkts 100, damit ein Zugriff auf den Zugangspunkt 100 und damit auf ein Onboard-Netzwerk an Bord des Flugzeugs gewährleistet ist. Falls neue oder aktualisierte Sicherheitsdaten zur Verfügung stehen, ruft das mobile Endgerät 200 diese Sicherheitsdaten ab oder, allgemein gesprochen, erhält diese Sicherheitsdaten von dem der Sicherheitsdatenserver 400. In diesem Sinne kann das mobile Endgerät 200 sozusagen als eine Art Sicherheits-Client arbeiten. Zudem erhalten die mobilen Endgeräte 300 zumindest einen Teil der Sicherheitsdaten von dem Sicherheitsdatenserver 400. Die mobilen Endgeräte 300 werden nicht von dem Hauptnutzer sondern von normalen Nutzern, wie anderen Mitgliedern der Flugzeugbesatzung, mitgeführt. Die mobilen Endgeräte 300 erhalten zumindest den Teil der Sicherheitsdaten, der gewährleistet, dass die mobilen Endgeräte später von dem Zugangspunkt 300 authentifiziert werden können. Bei diesem Teil der Sicherheitsdaten kann es sich um den Netzwerknamen und den Netzwerkschlüssel handeln.

Die Verbindung mit dem Sicherheitsdatenserver 400 kann beispielsweise durch den Benutzer des mobilen Endgeräts 200 selbst oder durch das mobile Endgerät 200 selbst getriggert (ausgelöst) werden, zum Beispiel durch auf dem mobilen Endgerät laufende Software wie die genannte Applikation. Zusätzlich oder alternativ kann die Verbindung durch am Boden verfügbare Netzwerke / Netze getriggert (ausgelöst) werden, wie durch ein Zusammenspiel aus Sicherheitsdatenserver 400 und Mobilfunknetz 600. Im Fall des Auslösens durch den Sicherheitsdatenserver 400 kann dieser die Verbindung beispielsweise mit Hilfe eines sogenannten Daten-Pushs über das Mobilfunknetz 600 oder dergleichen triggern.

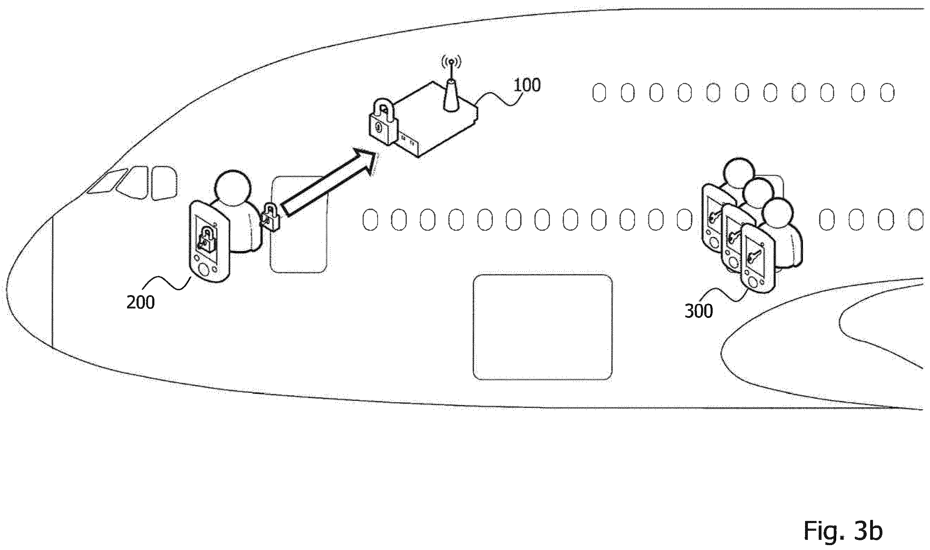

Sobald die Sicherheitsdaten für den nächsten Flug auf dem mobilen Endgerät 200 geprüft / verifiziert wurden oder erfolgreich auf dem mobilen Endgerät 200 aktualisiert wurden, kann der Hauptnutzer die Kabine des Flugzeugs betreten, um den Zugangspunkt 100 mit Hilfe der Sicherheitsdaten zu konfigurieren. Dies ist in Figur 3b illustriert. Nachfolgend wird der Zugangspunkt 100 getriggert (ausgelöst), von einem Normalmodus in einen Konfigurationsmodus zu wechseln. Der Hauptnutzer kann zum Triggern das Aussenden eines vertraulichen Signals veranlassen. Dies kann beispielsweise dadurch geschehen, indem der Hauptnutzer ein Betätigungselement im Flugzeug, wie einem bestimmten Knopf oder eine bestimmte Taste oder ein Bedienelement an dem Kabinenmanagement-System oder Komponenten des Kabinenmanagement-Systems, betätigt. Diese Betätigung kann entsprechend das Triggersignal auslösen, welches z.B. fest verdrahtet an den Zugangspunkt 100 gesendet wird. Alternativ kann eine Übertragung über sogenannte Out-of-Band-Systeme erfolgen. Jedenfalls wird durch Senden des vertraulichen Signals dem Zugangspunkt 100, und nur dem Zugangspunkt 100, mitgeteilt, dass er in den Konfigurationsmodus wechseln soll. Andere Geräte können hierüber keinerlei Kenntnis erlangen, da das vertrauliche Signal über einen sicheren Kommunikationskanal übertragen wird. Nach Erhalt des Signals geht der Zugangspunkt 100 in den Konfigurationsmodus über. Nach dem erfolgreichen Übergang in den Konfigurationsmodus aktiviert der Zugangspunkt 100 eine spezielle Konfigurationsschnittstelle 102. Die speziellen Eigenschaften dieser Konfigurationsschnittstelle, beispielsweise Authentifizierungsberechtigungen, Protokolle oder dergleichen, sind nur dem mobilen Endgerät 200 des Hauptnutzers bekannt, beispielsweise weil diese als Teil der Sicherheitsdaten übertragen wurden, welche nur an das mobile Endgerät 200 des Hauptnutzers übermittelt wurden. Demnach kann nur das mobile Endgerät 200 des Hauptnutzers sich mit dem Zugangspunkt 100 über die Konfigurationsschnittstelle 102 verbinden. Für andere Geräte ist eine Verbindung über die Konfigurationsschnittstelle 102 unmöglich. Nach erfolgreicher Verbindung kann entsprechend der Rechte des mobilen Endgeräts 200 eine Operation ausgeführt werden, um die Sicherheitseinstellungen in dem Zugangspunkt 100 festzulegen. Hierfür überträgt das mobile Endgerät 200 die Sicherheitsdaten über die Konfigurationsschnittstelle 102 an den Zugangspunkt 100. Zusätzlich kann eine Software-Parametrisierung oder ein Software-Update an dem Zugangspunkt 100 durchgeführt werden.

Wie erwähnt, wird das verbundene mobile Endgerät 200 des Hauptnutzers nun automatisch die richtigen Sicherheitsdaten an den Zugangspunkt 100 übertragen. Diese Sicherheitsdaten können beispielsweise den Netzwerknamen (z.B. den Service Set Identifier (SSID)), den Netzwerkschlüssel, und/oder Informationen über gültige / ungültige Client-Zertifikate enthalten. Mit letzterem kann beispielsweise überprüft werden, ob wirklich nur berechtigte mobile Endgeräte 200, 300 sich mit dem Zugangspunkt 100 verbinden möchten. Ferner kann in den Sicherheitsdaten Information enthalten sein, mit Hilfe derer der Zugangspunkt 100 Berechtigungen der mobilen Endgeräte 200, 300 bzw. der Nutzer der mobilen Endgeräte 200, 300 überprüft werden können. Dies kann als Autorisierung durch den Zugangspunkt 100 bezeichnet werden. Beispielsweise kann der Zugangspunkt 100 anhand der Sicherheitsdaten ermitteln, ob der Nutzer eines mobilen Endgeräts 200 befugt ist, alle oder nur einen Teil der Kabinenfunktionen zu steuern, wie z.B. nur das Kabinenlicht etc.

Sobald die Sicherheitsdaten für den nächsten Flug erfolgreich auf dem Zugangspunkt 100 von dem mobilen Endgerät 200 des Hauptnutzers erhalten wurden, deaktiviert der Zugangspunkt 100 die Konfigurationsschnittstelle 102 automatisch. Dementsprechend geht der Zugangspunkt 100 von dem Konfigurationsmodus in den Normalmodus über. Als zusätzliche Absicherung kann vorgesehen sein, dass die Konfigurationsschnittstelle 102 nach Ablauf einer bestimmten Zeitspanne deaktiviert wird, d.h. der Zugangspunkt 100 aus dem Konfigurationsmodus in den Normalmodus übergeht. Basierend auf den erhaltenen Sicherheitsdaten kann der Zugangspunkt seine Sicherheitseinstellungen konfigurieren oder aktualisieren.

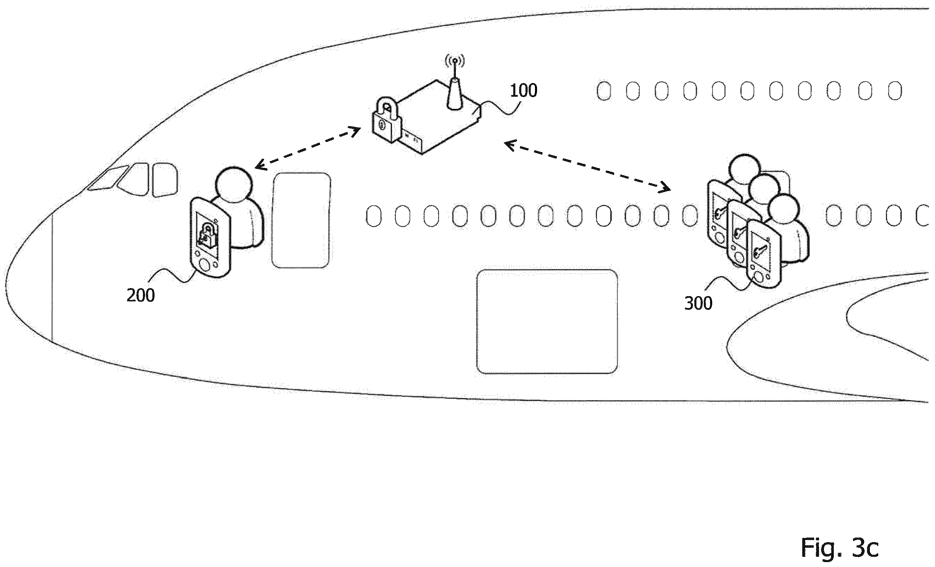

In dem Normalmodus liegen die neuen oder aktualisierten Sicherheitseinstellungen in dem Zugangspunkt 100 vor, so dass sich mobile Endgeräte 300 von normalen Nutzern, beispielsweise normale Flugbegleiter, automatisch mit dem Netzwerk über den Zugangspunkt 100 verbinden können, sobald sie in dessen Versorgungsbereich gelangen und von dem Zugangspunkt 100 authentifiziert wurden, wie dies in Figur 3c gezeigt ist. Das heißt, in dem Normalmodus kann sich nicht nur das mobile Endgerät 200 sondern können sich auch die mobilen Endgeräte 300 mit dem Zugangspunkt 100 verbinden, sofern sie dazu berechtigt sind. Die mobile Endgeräte 300 müssen sich für den automatischen Zugriff auf den Zugangspunkt 100 in dem Versorgungsbereich des Zugangspunkts 100 befinden und von dem Zugangspunkt 100 als berechtigt authentifiziert werden. Die Authentifizierung kann der Zugangspunkt 100 anhand der Vorkonfiguration der mobilen Endgeräte 300 vornehmen. Bei der Vorkonfiguration kann es sich beispielsweise um Sicherheitseinstellungen handeln, die mittels einer speziellen App oder spezieller Software voreingestellt sind oder erzeugt werden können. Es ist denkbar, dass der Zugangspunkt 100 und die mobilen Endgeräte einseitig oder wechselseitig Informationen, wie zumindest Teile der Sicherheitsdaten, übersenden bzw. austauschen, so dass der Zugangspunkt 100 die Zugriffsberechtigung der mobilen Endgeräte 300 prüfen kann.

In Figur 4 werden die in Bezug auf die Figuren 3a bis 3c beschriebenen Details zusammengefasst. Zunächst erhält ein mobiles Endgerät 200 von einem Sicherheitsdatenserver 400 flugbezogene Sicherheitsdaten (Schritt S402). Anschließend leitet das mobile Endgerät 200 die flugbezogenen Sicherheitsdaten an den Zugangspunkt 100 weiter (Schritt S404). Dann erhält der Zugangspunkt 100 die flugbezogenen Sicherheitsdaten von dem mobilen Endgerät 200 über eine Konfigurationsschnittstelle 102 des Zugangspunkts 100 (Schritt S406). Schließlich konfiguriert der Zugangspunkt 100 seine Sicherheitseinstellungen in einem Konfigurationsmodus basierend auf den flugbezogenen Sicherheitsdaten. Dadurch wird ermöglicht, dass eine automatische Authentifizierung von mobilen Endgeräten 200, 300 für den Zugriff auf den Zugangspunkt 100 möglich ist (Schritt S408).

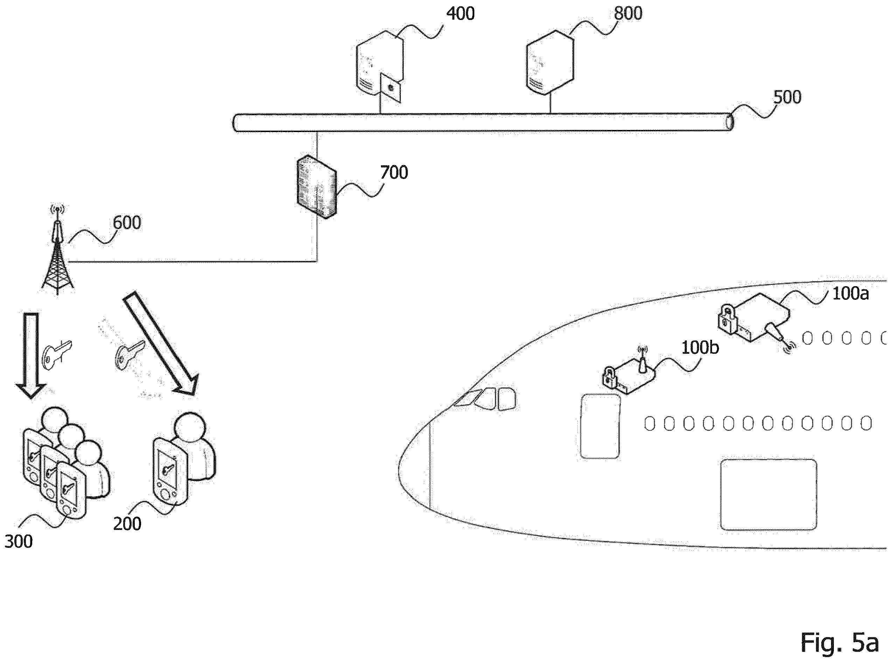

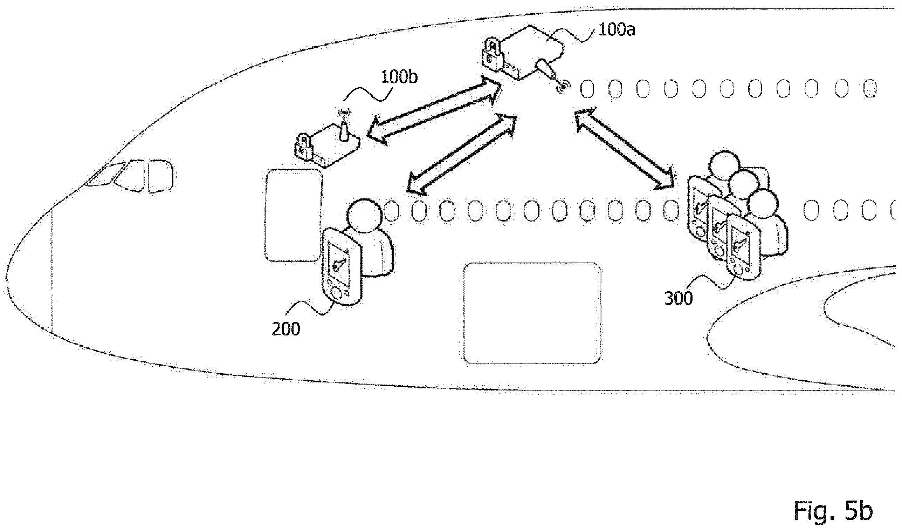

In Bezug auf die Figuren 5a und 5b wird nun noch ein Fall erläutert, in dem bereits ein Zugangspunkt 100a in einem Flugzeug vorinstalliert ist und nicht ausgetauscht und durch den Zugangspunkt 100 ersetzt werden soll. In diesem Fall wird eine zusätzliche Steuereinheit 100b in dem Flugzeug vorgesehen. Der Zugangspunkt 100a übernimmt in diesem Fall die Rolle eines WiFi-Zugangspunkts 100a und die Steuereinheit 100b übernimmt die Funktion der Steuerung von eingegangenen Befehlen, wie der Steuerung von Kabinenfunktionen.

Wie in Figur 5a zu erkennen, erhalten in diesem Fall das mobile Endgerät 200 des Hauptnutzers und die mobilen Endgeräte 300 der normalen Benutzer flugbezogene Sicherheitsdaten von dem Sicherheitsdatenserver 400 wie bereits in Bezug auf Figur 3a beschrieben. Es ist denkbar, dass die mobilen Endgeräte 200 und die mobilen Endgeräte 300 identische Sicherheitsdaten erhalten. Die mobilen Endgeräte 200, 300, die sich in dem Versorgungsbereich des Zugangspunkts 100a befinden, können nun Zugriff auf den Zugangspunkt 100a erlangen wie dies in Bezug auf Figur 3c beschrieben wurde. Allerdings führt in dem Beispiel aus Figur 5b der Zugangspunkt 100a nicht die erhaltenen Steuerbefehle aus. Stattdessen leitet er die erhaltenen Steuerbefehle an die Steuereinheit 100b weiter, die die Steuerbefehle versteht und entsprechend weiterverarbeiten kann. Die Steuereinheit 100b steuert die jeweiligen Kabinenfunktionen entsprechend. Durch die in Bezug auf die Figuren 3a und 3b beschriebene Vorgehensweise wird ein einfaches Nachrüsten von Flugzeugen zur sicheren Steuerung durch mobile Endgeräte ermöglicht.

Mit Hilfe der Erfindung werden ein Authentifizierungssystem, Teile daraus und entsprechende Verfahren bereitgestellt, welche zumindest so sicher sind wie der Stand der Technik der Enterprise-WiFi-Netzwerksicherheitslösungen. Ferner wird zumindest eine ähnliche Benutzerfreundlichkeit erreicht. Jedoch ist es im Gegensatz zum Stand der Technik nicht nötig, dass die Zugangspunkte 100 direkt mit dem Sicherheitsdatenserver 400 über ein Backbone-Netzwerk verbunden werden.

## Patentansprüche

1. Verfahren zum Konfigurieren von Sicherheitseinstellungen eines an Bord eines Flugzeugs angeordneten Zugangspunkts (100) für die Authentifizierung von mobilen Endgeräten (200, 300), wobei das Verfahren umfasst:
- Erhalten (S402) von flugbezogenen Sicherheitsdaten an einem mobilen Endgerät (200) von einem Sicherheitsdatenserver (400);
- Weiterleiten (S404) der flugbezogenen Sicherheitsdaten an den Zugangspunkt (100), um ein derartiges Konfigurieren von Sicherheitseinstellungen des Zugangspunkts (100) basierend auf den flugbezogenen Sicherheitsdaten zu ermöglichen;
- Erhalten (S406) von flugbezogenen Sicherheitsdaten von einem mobilen Endgerät (200) über eine Konfigurationsschnittstelle (102) des Zugangspunkts (100); und
- derartiges Konfigurieren (S408) von Sicherheitseinstellungen des Zugangspunkts (100) in einem Konfigurationsmodus basierend auf den flugbezogenen Sicherheitsdaten, dass eine automatische Authentifizierung von vorkonfigurierten mobilen Endgeräten (300) für den Zugriff auf den Zugangspunkt (100) möglich ist, wobei
der Zugangspunkt (100) anhand der Sicherheitsdaten die Steuerungsbefugnisse eines Nutzers des jeweiligen mobilen Endgerätes (200, 300) ermittelt.

2. Verfahren nach Anspruch 1, wobei das Verfahren ferner umfasst:
- automatisches Authentifizieren der vorkonfigurierten mobilen Endgeräte (300), die sich in dem Versorgungsbereich des Zugangspunkt (100) befinden, für den Zugriff auf den Zugangspunkt (100); und/oder
- automatisches Autorisieren der vorkonfigurierten mobilen Endgeräte (300), die sich in dem Versorgungsbereich des Zugangspunkt befinden, für den Zugriff auf den Zugangspunkt (100).

3. Verfahren nach Anspruch 1 oder 2, wobei das Verfahren ferner umfasst:
- Erhalten eines Triggersignals über einen sicheren Kommunikationskanal; und
- Aktivieren der Konfigurationsschnittstelle (102) nach Erhalt des Triggersignals.

4. Verfahren nach einem der Ansprüche 1 bis 3, wobei das Verfahren ferner umfasst:
- Deaktivieren der Konfigurationsschnittstelle (102) nach Erhalt der flugbezogenen Sicherheitsdaten oder nach Ablauf einer vorgegebenen Zeitspanne.

5. Verfahren nach einem der Ansprüche 1 bis 4, wobei das Verfahren ferner umfasst:
- Aktivieren eines Normalmodus, in dem der Zugriff auf den Zugangspunkt (100) durch authentifizierte mobile Endgeräte (200, 300) möglich ist, nach Erhalt der flugbezogenen Sicherheitsdaten.

6. Verfahren nach Anspruch 1 bis 5, wobei das Verfahren umfasst:
- Anfordern der flugbezogenen Sicherheitsdaten von dem mobilen Endgerät (200) an einem Sicherheitsdatenserver (400); und/oder
- Benachrichtigen des mobilen Endgeräts (200) durch den Sicherheitsdatenserver (400), die flugbezogenen Sicherheitsdaten anzufordern.

7. Verfahren nach Anspruch 1 bis 6, wobei das Verfahren ferner umfasst:
- Speichern der flugbezogenen Sicherheitsdaten auf dem mobilen Endgerät (200).

8. Verfahren nach Anspruch 1 bis 7, wobei das Verfahren ferner umfasst:
- Zugreifen der authentifizierten mobilen Endgeräte (200, 300) auf den Zugangspunkt (100).

9. Verfahren nach Anspruch 8, wobei das Verfahren ferner umfasst: Steuern von Kabinenfunktionen des Flugzeugs mit Hilfe der authentifizierten mobilen Endgeräte (200, 300).

10. System mit einem Zugangspunkt (100) und mindestens einem mobilen Endgerät (200), wobei
- der Zugangspunkt (100), dessen Sicherheitseinstellungen für die Authentifizierung von sich an Bord eines Flugzeugs befindenden mobilen Endgeräten (200, 300) konfigurierbar sind, umfasst:
-- eine Konfigurationsschnittstelle (102), die dazu ausgebildet ist, flugbezogene Sicherheitsdaten von einem mobilen Endgerät (200) zu erhalten; und
-- eine Konfigurationskomponente (104), die dazu ausgebildet ist, Sicherheitseinstellungen des Zugangspunkts (100) in einem Konfigurationsmodus derart zu konfigurieren, dass eine automatische Authentifizierung von vorkonfigurierten mobilen Endgeräten (200, 300) für den Zugriff auf den Zugangspunkt (100) möglich ist; und
- das mindestens eine mobile Endgerät (200, 300), welches dazu ausgebildet ist, die Konfiguration von Sicherheitseinstellungen des an Bord eines Flugzeugs angeordneten Zugangspunkts (100) für die Authentifizierung von mobilen Endgeräten (200, 300) vorzubereiten, umfasst:
-- eine Empfangskomponente (202), die dazu ausgebildet ist, flugbezogene Sicherheitsdaten von einem Sicherheitsdatenserver (400) zu erhalten; und
-- eine Sendekomponente (204), die dazu ausgebildet ist, die flugbezogenen Sicherheitsdaten an den Zugangspunkt (100) weiterzuleiten, um ein derartiges Konfigurieren von Sicherheitseinstellungen des Zugangspunkts (100) basierend auf den flugbezogenen Sicherheitsdaten zu ermöglichen, dass eine automatische Authentifizierung von mobilen Endgeräten (200, 300) für den Zugriff auf den Zugangspunkt (100) möglich ist; und wobei
der Zugangspunkt (100) ferner dazu ausgebildet ist, anhand der von den mobilen Endgerät/en (200, 300) erhaltenen Sicherheitsdaten die Steuerungsbefugnisse eines Nutzers eines jeweiligen mobilen Endgerätes (200, 300) zu ermitteln.

## Claims

1. Method for configuring security settings of an access point (100) arranged on board an aircraft for authenticating mobile terminals (200, 300), wherein the method comprises:
- receiving (S402) flight-related security data on a mobile terminal (200) from a security data server (400);
- forwarding (S404) the flight-related security data to the access point (100) in order to enable such configuration of security settings of the access point (100) on the basis of the flight-related security data;
- receiving (S406) flight-related security data from a mobile terminal (200) via a configuration interface (102) of the access point (100); and
- configuring (S408) security settings of the access point (100) in a configuration mode on the basis of the flight-related security data in such a manner that preconfigured mobile terminals (300) can be automatically authenticated for access to the access point (100), wherein
the access point (100) determines the control authorizations of a user of the respective mobile terminal (200, 300) on the basis of the security data.

2. Method according to Claim 1, wherein the method also comprises:
- automatically authenticating the preconfigured mobile terminals (300), which are in the supply area of the access point (100), for access to the access point (100); and/or
- automatically authorizing the preconfigured mobile terminals (300), which are in the supply area of the access point, for access to the access point (100).

3. Method according to Claim 1 or 2, wherein the method also comprises:
- receiving a trigger signal via a secure communication channel; and
- activating the configuration interface (102) after receiving the trigger signal.

4. Method according to one of Claims 1 to 3, wherein the method also comprises:
- deactivating the configuration interface (102) after receiving the flight-related security data or after expiry of a predefined period.

5. Method according to one of Claims 1 to 4, wherein the method also comprises:
- activating a normal mode in which authenticated mobile terminals (200, 300) can access the access point (100) after receiving the flight-related security data.

6. Method according to Claims 1 to 5, wherein the method comprises:
- requesting the flight-related security data from a security data server (400) by the mobile terminal (200); and/or
- notifying the mobile terminal (200) to request the flight-related security data by means of the security data server (400).

7. Method according to Claims 1 to 6, wherein the method also comprises:
- storing the flight-related security data on the mobile terminal (200).

8. Method according to Claims 1 to 7, wherein the method also comprises:
- accessing the access point (100) by the authenticated mobile terminals (200, 300).

9. Method according to Claim 8, wherein the method also comprises: controlling cabin functions of the aircraft with the aid of the authenticated mobile terminals (200, 300).

10. System having an access point (100) and at least one mobile terminal (200), wherein
- the access point (100) whose security settings can be configured for authenticating mobile terminals (200, 300) on board an aircraft comprises:
-- a configuration interface (102) which is designed to receive flight-related security data from a mobile terminal (200); and
-- a configuration component (104) which is designed to configure security settings of the access point (100) in a configuration mode in such a manner that preconfigured mobile terminals (200, 300) can be automatically authenticated for access to the access point (100); and
- the at least one mobile terminal (200, 300) which is designed to prepare the configuration of security settings of the access point (100) arranged on board an aircraft for authenticating mobile terminals (200, 300) comprises:
-- a receiving component (202) which is designed to receive flight-related security data from a security data server (400); and
-- a transmitting component (204) which is designed to forward the flight-related security data to the access point (100) in order to make it possible to configure security settings of the access point (100) on the basis of the flight-related security data in such a manner that mobile terminals (200, 300) can be automatically authenticated for access to the access point (100); and wherein
the access point (100) is also designed to determine the control authorizations of a user of a respective mobile terminal (200, 300) on the basis of the security data received from the mobile terminal(s) (200, 300).

## Revendications

1. Procédé de configuration de réglages de sécurité d'un point de connexion (100) disposé à bord d'un aéronef pour l'authentification de terminaux mobiles (200, 300), le procédé comprenant:
- obtention (S402) de données de sécurité relatives au vol au niveau d'un terminal mobile (200) de la part d'un serveur de données de sécurité (400);
- retransmission (S404) des données de sécurité relatives au vol au point de connexion (100) afin de rendre possible une telle configuration de réglages de sécurité du point de connexion (100) en se basant sur les données de sécurité relatives au vol;
- obtention (S406) de données de sécurité relatives au vol au niveau d'un terminai mobile (200) par le biais d'une interface de sécurité (102) du point de connexion (100); et
- configuration (S408) de réglages de sécurité du point de connexion (100) dans un mode de configuration en se basant sur les données de sécurité relatives au vol de telle sorte qu'une authentification automatique de terminaux mobiles (300) préconfigurés pour l'accès au point de connexion (100) soit possible,
le point de connexion (100) déterminant les autorisations de commande d'un utilisateur du terminal mobile (200, 300) respectif à l'aide des données de sécurité.

2. Procédé selon la revendication 1, le procédé comprenant en outre:
- authentification automatique des terminaux mobiles (300) préconfigurés qui se trouvent dans la zone de couverture du point de connexion (100) pour l'accès au point de connexion (100); et/ou
- autorisation automatique des terminaux mobiles (300) préconfigurés qui se trouvent dans la zone de couverture du point de connexion (100) pour l'accès au point de connexion (100).

3. Procédé selon la revendication 1 ou 2, le procédé comprenant en outre:
- obtention d'un signal de déclenchement par le biais d'un canal de communication sécurisé; et
- activation de l'interface de configuration (102) après l'obtention du signal de déclenchement.

4. Procédé selon l'une des revendications 1 à 3, le procédé comprenant en outre:
- désactivation de l'interface de configuration (102) après obtention des données de sécurité relatives au vol ou après écoulement d'un intervalle de temps prédéfini.

5. Procédé selon l'une des revendications 1 à 4, le procédé comprenant en outre:
- activation d'un mode normal, dans lequel l'accès au point de connexion (100) par des terminaux mobiles authentifiés (200, 300) est possible, après obtention des données de sécurité relatives au vol.

6. Procédé selon les revendications 1 à 5, le procédé comprenant en outre:
- demande des données de sécurité relatives au vol du terminal mobile (200) à un serveur de données de sécurité (400) ; et/ou
- notification du terminal mobile (200) par le serveur de données de sécurité (400) pour informer de demander les données de sécurité relatives au vol.

7. Procédé selon les revendications 1 à 6, le procédé comprenant en outre:
- enregistrement des données de sécurité relatives au vol sur le terminal mobile (200).

8. Procédé selon les revendications 1 à 7, le procédé comprenant en outre:
- accès des terminaux mobiles (200, 300) authentifiés au point de connexion (100).

9. Procédé selon la revendication 8, le procédé comprenant en outre: commande de fonctions de cabine de l'aéronef à l'aide des terminaux mobiles (200, 300) authentifiés.

10. Système comprenant un point de connexion (100) et au moins un terminal mobile (200),
- le point de connexion (100), dont les réglages de sécurité peuvent être configurés pour l'authentification de terminaux mobiles (200, 300) qui se trouvent à bord d'un aéronef, comprenant:
-- une interface de configuration (102) qui est conçue pour obtenir des données de sécurité relatives au vol de la part d'un terminal mobile (200); et
-- un composant de configuration (104) qui est conçu pour configurer les réglages de sécurité du point de connexion (100) dans un mode de configuration de telle sorte qu'une authentification automatique de terminaux mobiles (200, 300) préconfigurés pour l'accès au point de connexion (100) soit possible; et
- l'au moins un terminal mobile (200, 300), lequel est conçu pour préparer la configuration de réglages de sécurité du point de connexion (100) disposé à bord d'un aéronef pour l'authentification de terminaux mobiles (200, 300), comprenant:
-- un composant d'entrée (202) qui est conçu pour obtenir des données de sécurité relatives au vol de la part d'un serveur de données de sécurité (400); et
-- un composant d'émission (204) qui est conçu pour retransmettre les données de sécurité relatives au vol au point de connexion (100) afin de rendre possible une configuration de réglages de sécurité du point d'accès (100) en se basant sur les données de sécurité relatives au vol de telle sorte qu'une authentification automatique de terminaux mobiles (200, 300) pour l'accès au point de connexion (100) soit possible; et
le point de connexion (100) étant en outre conçu pour déterminer les autorisations de commande d'un utilisateur d'un terminal mobile (200, 300) respectif à l'aide des données de sécurité obtenues par le ou les terminaux mobiles (200, 300).
